# EUROPEAN PATENT SPECIFICATION

(11) **EP 0 320 313 B1**
(45) Date of publication and mention of the grant of the patent: **02.03.1994**
(21) Application number: 88311756.6
(22) Date of filing: 12.12.1988
(51) Int. Cl.: B60K 17/04

(54) **Drive system for automobiles**
Antriebssystem für Kraftfahrzeuge
Dispositif d'entraînement pour véhicules automobiles

(30) Priority: 11.12.1987 JP 313825/87
(43) Date of publication of application: 14.06.1989
(73) Proprietor: HONDA GIKEN KOGYO KABUSHIKI KAISHA, Minato-ku, Tokyo (JP)
(72) Inventor: Nakayama, Hiroshi, Niiza-shi Saitama (JP); Yumoto, Toshiyuki, Fujimi-shi Saitama (JP); Kazama, Akio, Fujimi-shi Saitama (JP)
(74) Representative: Leale, Robin George

(56) References cited:
- EP-A- 0 183 051
- EP-A- 0 213 959
- DE-A- 2 805 901
- FR-A- 2 405 832
- GB-A- 2 001 593

## Description

The present invention relates to a drive system for an automobile and, in particular, a front-engine and front wheel drive type system which couples an engine and a transmission to each other and couples a final speed reduction gear unit to the engine.

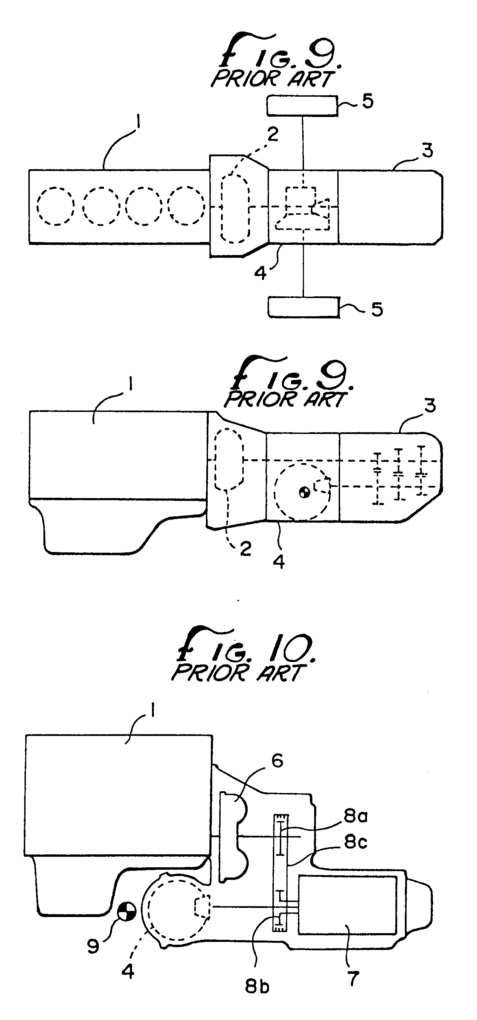

For purposes of making a drive system compact in an automobile, some front-engine and front-drive (FF) automobiles include, as shown in FIGS. 9A and 9B of the accompanying drawings, a gear transmission comprising a torque converter (or clutch) 2 and a transmission mechanism 3 with a final speed reduction gear unit 4 disposed therebetween. With the illustrated arrangement, the engine 1 overhangs forwardly of the pair of laterally spaced road wheels 5 disposed on the opposite sides of the final reduction gear unit 4. Therefore, the automobile is heavier at its front portion than at its rear portion, i.e., the weight of the automobile is not uniformly distributed in its longitudinal direction. Since the road wheels 5 are positioned to the rear of the engine compartment of the automobile, the passenger compartment is reduced in size, particularly the foot space in front of the front seats.

Japanese Patent Publication No. 58-24289 discloses, as shown in FIG. 10 of the accompanying drawings, another conventional arrangement with a final speed reduction gear unit 4 disposed directly underneath the engine 1. In order to make the passenger compartment as large as possible, the transmission 7 is located below the output shaft of the engine 1 and the output of a torque converter 6 and the input shaft of the transmission 7 are operatively coupled to each other by sprockets 8a, 8b and a chain 8c trained therearound. In the illustrated structure, the final reduction gear unit 4 is integrally joined to the transmission. However, the final reduction gear unit may be integrally joined to the engine downwardly thereof, and may be operatively coupled to the transmission by an intermediate shaft. The layout disclosed in Fig. 10 reduces the forward overhang of the engine 1, thereby providing a larger passenger compartment space. However, inasmuch as the final reduction gear unit 4 is positioned beneath the engine 1, the top of the engine 1 is relatively high with respect to the automobile body and therefore so is the engine hood. The driver of the automobile has limited visibility in the forward-downward direction and the automobile is less stable because the center of gravity of the engine 1 is higher. It is therefore desirable to locate the final reduction gear unit laterally of the engine.

When the transmission is joined to the output end of the engine and the final reduction gear unit is joined to the side of the engine laterally or downwardly thereof, with the transmission output shaft and the final reduction gear unit input shaft being coupled to each other through an intermediate shaft, thereby providing a drive system, there are certain disadvantages in and limitations on the process of assembling and disassembling the drive system. For example, when joining the final reduction gear unit to the engine laterally thereof, it is the normal practice to employ a positioning pin across the joining surfaces of the final reduction gear unit and the engine to position them with respect to each other. To detach the final reduction gear unit from the engine, it is necessary to remove the final reduction gear unit in a direction normal to the axial direction of the intermediate shaft. Therefore, the final reduction gear unit cannot be dismounted unless the intermediate shaft is removed. To remove the intermediate shaft, however, the transmission must be detached from the engine at first. Consequently, the transmission must first be dismounted in order to disassemble the final reduction gear unit. The disassembling and assembling procedure is therefore complex and expensive.

In view of the aforesaid problems, it is an object of the present invention to provide a drive system which allows a transmission and a final speed reduction gear unit which are interconnected by an intermediate shaft, to be disconnected while the transmission and the final gear unit are still joined to the engine.

EP-A-213959 discloses a drive system for an automobile comprising an engine, a transmission having an output shaft and coupled to an output end of the engine, a final speed reduction gear unit coupled to said engine either laterally or downwardly thereof separately from said transmission and having an input shaft positioned substantially coaxially with said output shaft of the transmission, said input shaft and output shaft being coupled to each other through an intermediate shaft.

The present invention is characterised in that said intermediate shaft is a single substantially rigid member with axially extending spline means on each end engageable with axially extending spline means on the input and output shafts, in that the intermediate shaft is selectively coaxially movable with respect to said output shaft and said input shaft, in that a locking member is provided having a locked position for locking said intermediate shaft in a position in which the spline means of the intermediate shaft is engaged with the spline means of said output and input shafts, and in that said intermediate shaft is releasable from said engaged position when said locking member is in the unlocked position and the intermediate shaft is then movable, only axially, with respect to said input and output shafts until spline means on one end of the intermediate shaft is disengaged from one of said output and input shafts and the spline means on the other end remains engaged with the other of said input and output shafts for mounting and/or dismounting of the final speed gear reduction unit and/or said transmission in a lateral direction.

With such an arrangement the intermediate shaft can be disengaged from at least one of the transmission output shafts or the final speed reduction gear unit input shaft by releasing the intermediate shaft from the locking member and moving the intermediate shaft in an axial direction. Thus, for dismounting the transmission and the final reduction gear unit from the engine, the intermediate shaft is unlocked from the locking member so as to be axially movable, and then is moved to disengage from the output shaft of the transmission or the input shaft of the final reduction gear unit.

With the intermediate shaft disengaged from the transmission or the final reduction gear unit, the transmission and the final reduction gear unit can independently be disassembled or assembled, and hence the disassembling and assembling process is greatly simplified.

Some embodiments of the invention will now be described by way of example and with reference to the accompanying drawings, wherein:
FIG. 1 is a side elevational view of an automobile including a drive system according to the present invention;
FIG. 2 is a schematic side elevational view of the drive system;
FIG. 3 is an enlarged cross-sectional view taken along line III - III of FIG. 2;
FIG. 4 is an enlarged cross-sectional view of the drive system taken along the shafts of the transmission;
FIG. 5 is a rear elevational view of the drive system;
FIG. 6 is an enlarged fragmentary cross-sectional view of a portion of Fig. 4 showing a joint structure including an intermediate shaft in the drive system;
FIG. 7 is a further enlarged fragmentary cross-sectional view of a portion of the joint structure shown in FIG. 6;
FIG. 8 is a fragmentary cross-sectional view similar to Fig. 6 showing a joint structure including an intermediate shaft in a drive system according to another embodiment of the present invention;
FIGS. 9A and 9B are plan and elevation views, respectively, showing a conventional drive system; and FIG. 10 is an elevation view showing another conventional drive system.

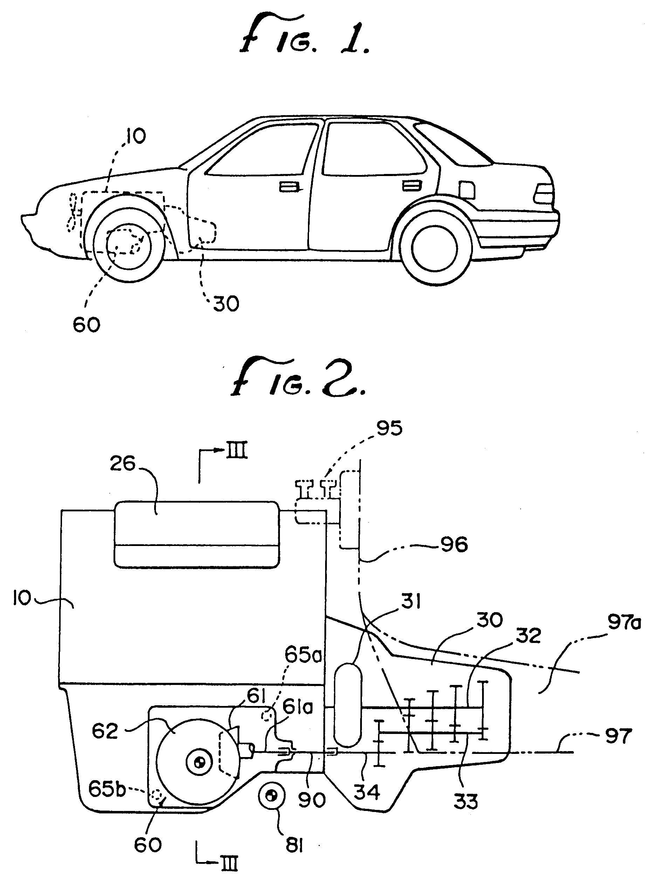

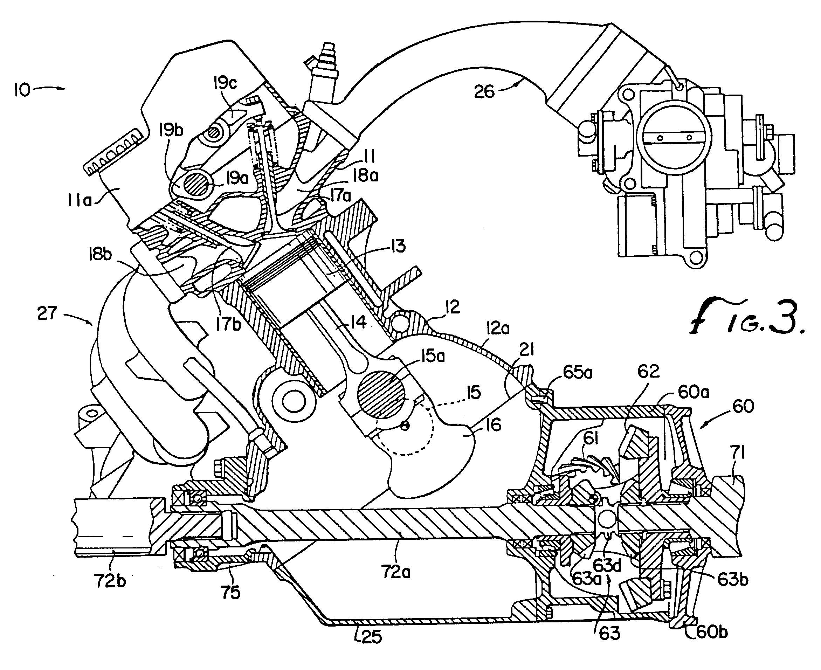

FIG. 1 is a side elevational view showing an automobile equipped with a drive system according to the present invention. The drive system is installed in the front portion of the automobile and comprises an engine 10, a transmission 30, and a final speed reduction gear unit 60. The drive system is schematically shown in FIG. 2. The engine 10 has a crankshaft extending longitudinally of the automobile and has the rear end coupled to the transmission 30. The final reduction gear unit 60 is joined to the lefthand side of the engine 10. The output shaft of the engine 10 is connected coaxially to an input shaft 32 of the transmission 30 through a torque converter 31. The transmission 30 includes a countershaft-type transmission mechanism disposed between the input shaft 32 and a countershaft 33 extending parallel to the input shaft 32. The counter shaft 33 is operatively coupled to an output shaft 34 through an output gear train.

The final reduction gear unit 60 has a speed reducer gear train comprising a hypoid gear train, comprising a final driver pinion 61 and a final ring gear 62, and a differential gear train. These two gear trains are disposed in a case 60a having a cover 60b. The final reduction gear unit 60 on the lefthand side of the engine 10 is separate from the transmission 30. To position the final reduction gear unit 60 with respect to the engine 10, two positioning pins 65a and 65b extend across the joining surfaces of and into holes in the final reduction gear unit case 60a and an oil pan 25. The transmission output shaft 34 is located substantially coaxially with an input shaft (i.e., the shaft of the final driver pinion) 61a of the final reduction gear unit 60 and coupled thereto through an intermediate shaft 90.

An engine compartment and a passenger compartment of the automobile are separated from each other by a dashboard panel 96 and a floor panel 97 having a tunnel 97a. The engine 10, the transmission 30, and the final reduction gear unit 60 are disposed in the engine compartment, with the transmission 30 partly projecting into a lower portion of the passenger compartment. Since the final reduction gear unit 60 is mounted on the side of the engine 10, the engine 10 is very low in position with respect to the body of the automobile. Therefore, the transmission 30 is also positioned low and disposed in the tunnel 97a formed in the floor panel 97 in the longitudinal direction of the automobile body. The extent to which the transmission 30 projects into the passenger compartment is relatively small, thus making a large passenger compartment space available. Since the engine hood may also be lowered by lowering the engine 10, the forward view from the driver's seat is improved.

Since the transmission 30 and the final reduction gear unit 60 are disposed separately from each other and operatively coupled to each other through the intermediate shaft 90, a space is provided below the intermediate shaft 90. Therefore, tie rod 81 of the steering mechanism can be disposed in such a space, and hence the tie rod 81 can be disposed rearwardly of the final reduction gear unit 60 and the axle shafts extending laterally therefrom, without lowering the minimum height of the tie rod, and thus the automobile, from ground.

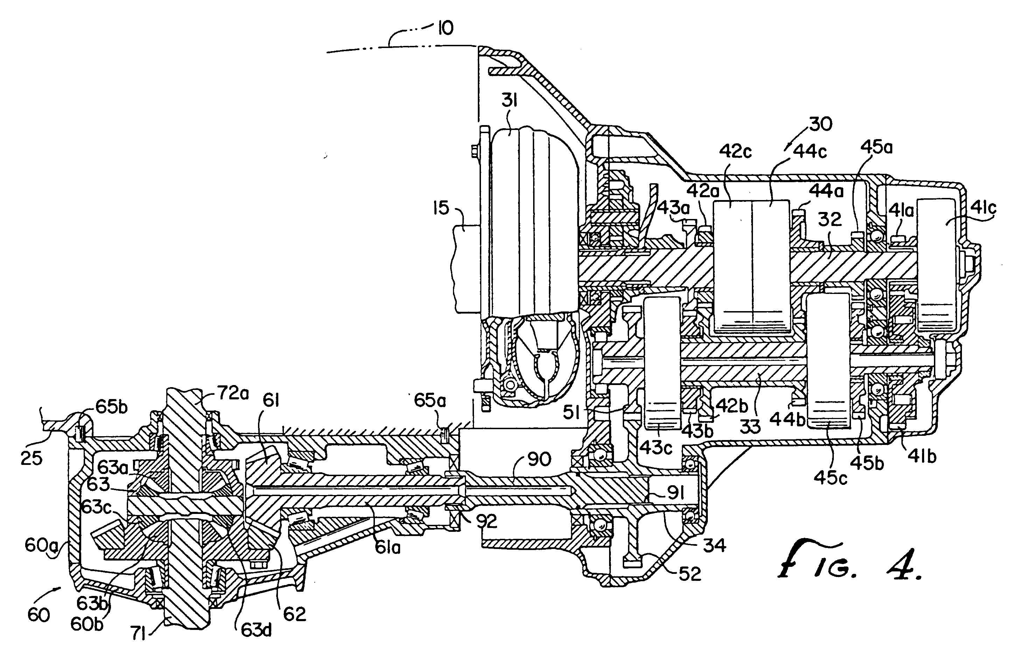

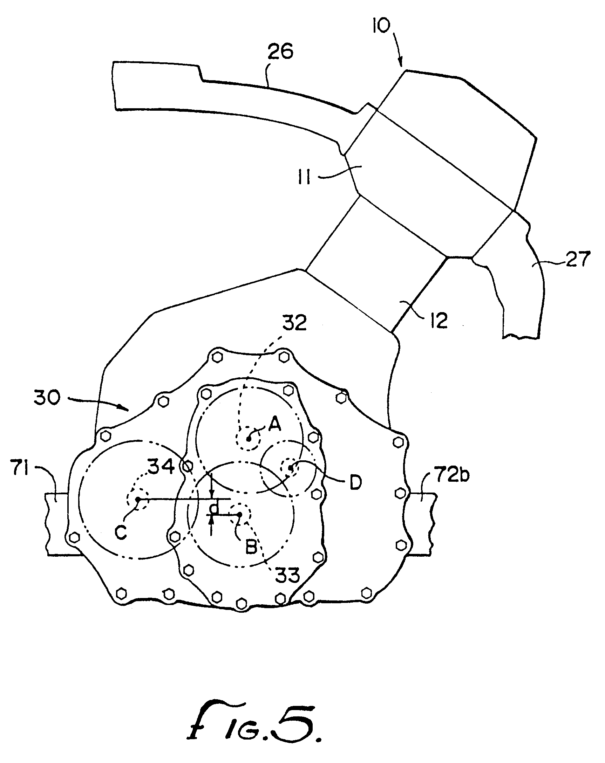

The drive system will be described in greater detail with reference to FIGS. 3 and 4. The engine 10 is an in-line multicylinder engine having a plurality of cylinders, the axes of which are inclined to the left (to the righthand side of the automobile body) from the vertical as viewed from the front of the automobile as shown in FIG. 3. With the cylinder axes thus inclined, the height of the entire engine 10 is reduced and the engine hood may be lowered. The engine 10 has an engine case comprising a cylinder block 12 in which pistons 13 are slidably accommodated for reciprocating sliding movement along the cylinder axes, a cylinder head 11 coupled to the upper surface of the cylinder block 12 and having intake and exhaust passages 18a, 18b and intake and exhaust valves 17a, 17b for opening and closing the intake and exhaust passages 18a, 18b, respectively, and an oil pan 25 coupled to the lower surface of the cylinder block 12.

The intake passages 18a are open at the side surface of the cylinder head 11 which faces away from the direction in which the cylinder axes are inclined. The open ends of the intake passages 18a are connected to an intake manifold 26. The exhaust passages 18b are open at the opposite side surface of the cylinder head 11 which faces in the direction in which the cylinder axes are inclined. An exhaust manifold 27 connected to the open ends of the exhaust passages 18b is mounted on the engine case. With this arrangement, the intake manifold 26 is disposed in a large space on the side of the cylinder head 11 which faces away from the direction in which the cylinder axes are inclined. It is therefore easy to increase the length of intake pipes for an increased intake air inertia effect to increase the performance of the engine.

A camshaft 19a having a plurality of cams 19b thereon arranged therealong is rotatably mounted on an upper end of the cylinder head 11. The camshaft 19a extends along the cylinder bank, i.e., in the longitudinal direction of the automobile. Upon rotation of the camshaft 19a in synchronism with engine rotation, the cams 19b cause rocker arms 19c to open and close the intake valves 17a and other rocker arms (not shown) to open and close the exhaust valves 17b. The camshaft 19a and the rocker arms 19c are covered with a head cover 11a mounted on the upper surface of the cylinder head 11.

The cylinder block 12 includes a lower crankcase 12a in which a crankshaft 15 extends longitudinally and is rotatably mounted. The crankshaft 15 includes a plurality of cranks 15a on which there are rotatably mounted connecting rods 14 having upper ends coupled to the respective pistons 13. The crankshaft 15 is rotated about its own axis through the connecting rods 14 and the cranks 15a in response to reciprocating movement of the pistons 13. Counterweights 16 are mounted on the crankshaft 15 and project away from the cranks 15a.

The oil pan 25 is joined to the lower surface 21 of the crankcase 12a of the cylinder block 12. The oil pan 25 and the case 60a of the final reduction gear unit 60 are fastened to each other by means of bolts or the like. As described above, the two positioning pins 65a, 65b (the pin 65b is not shown in Fig. 3) are provided for positioning the engine 10 and the final reduction gear unit 60 with respect to each other (the final reduction gear unit 10 and the axle shafts coupled thereto will be described below).

As shown in FIG. 4, the transmission 30 is connected to the rear end of the engine 10 and the illustrated transmission 30 is an automatic transmission although it will readily appear to those skilled in the art that it may be a manual shift type transmission without departing from this invention. The torque converter 31 (which would be a clutch with a manual transmission) is coupled to the output shaft or crankshaft 15 of the engine 10 and has an output shaft serving as the transmission input shaft 32. Between the transmission input shaft 32 and the transmission countershaft 33, there are disposed five gear trains, i.e., a first gear position gear train comprising intermeshing gears 41a, 41b, a second gear position gear train comprising intermeshing gears 42a, 42b, a third gear position gear train comprising intermeshing gears 43a, 43b, a fourth gear position gear train comprising intermeshing gears 44a, 44b, and a reverse gear position gear train comprising intermeshing gears 45a, 45b and a reverse idler gear (not shown). These gear trains are associated with respective hydraulically operated clutches 41c, 42c, 43c, 44c, 45c for transmitting engine power through the gear trains. By selectively operating these clutches 41c, 42c, 43c, 44c, 45c, one of the five gear trains is selected to transmit engine power in the corresponding gear position.

Since the position of the engine 10 with respect to the automobile body is low, the transmission 30 is disposed in the floor tunnel 97a as shown in FIG. 2 even though the input shaft 32 is disposed coaxially with the engine crankshaft 15 and the transmission mechanism is disposed between the input shaft 32 and the countershaft 33. Therefore, no conventional mechanism (such as the chain 8c in FIG. 10) for transmitting engine output power from the crankshaft to the transmission mechanism is disposed below the crankshaft since it is not necessary and therefore the transmission is structurally simpler.

The transmission countershaft 33 and the transmission output shaft 34 parallel thereto are operatively coupled to each other through an output gear train comprising intermeshing gears 51, 52, formed or mounted on shafts 33, 34, respectively. The engine output power transmitted through one of the five transmission gear trains which is selected by the corresponding hydraulically operated clutch is transmitted from the countershaft 33 to the output shaft 34. The output shaft 34 is positioned substantially coaxially with the input shaft of the final reduction gear unit 60, i.e., the shaft 61a of the final driver pinion 61, and coupled thereto through the intermediate shaft 90 which has splines 91, 92 on its opposite ends.

The hypoid gear train comprising the final driver pinion 61 and the final ring gear 62, and the differential gear train 63 comprising four bevel gears 63a, 63b, 63c and 63d are disposed in a space defined in and between the case 60a and the cover 60b. The bevel gears 63c, 63d are rotatably supported by the final ring gear 62, and the bevel gears 63a, 63b are coupled respectively to axle shafts 71, 72 (axle shaft 72 being comprised of shafts 72a and 72b). Therefore, the engine power transmitted to the transmission output shaft 34 is reduced in rotational speed by the hypoid gear train, and split and transmitted to the axle shafts 71, 72 through the differential gear train 63 to drive transversely spaced front road wheels coupled respectively to the axle shafts 71, 72.

The axle shaft 71 extends away from the direction in which the engine 10 is inclined, and is coupled to the lefthand front road wheel. The axle shaft 72 extends in the direction in which the engine 20 is inclined and is connected to the righthand front road wheel. The axle shaft 72 comprises a first shaft 72a extending through the engine case (i.e., the oil pan 25 and the crankcase 12a) that is rotatably supported in a shaft support member 75 attached to the side of the crankcase 12a remote from the final reduction gear unit 60, and a second shaft 72b coupled to the end of the first shaft 72a in the shaft support member 75.

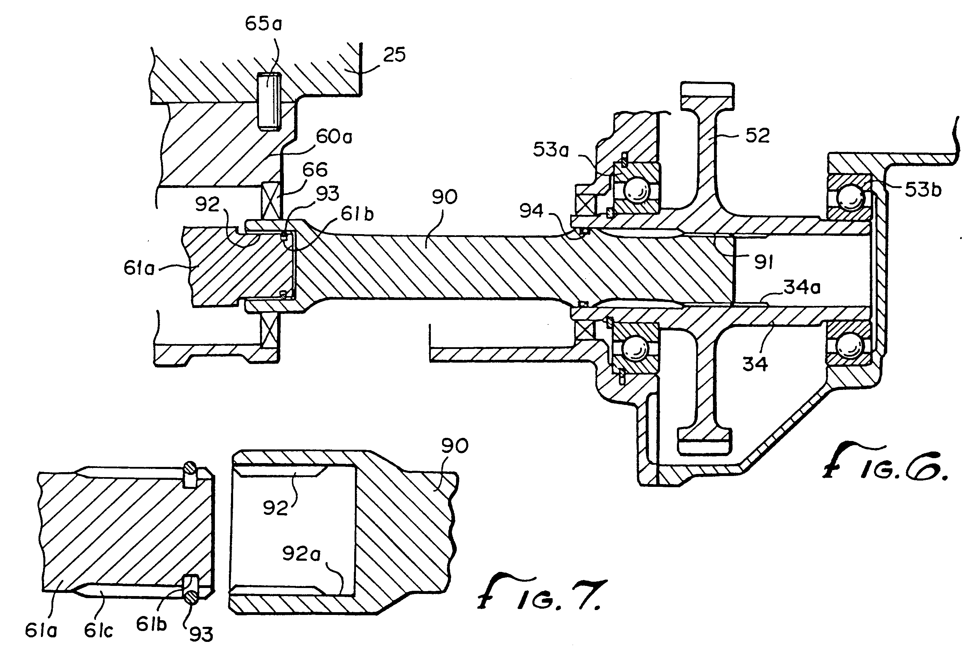

The drive system of the above construction is viewed from behind in FIG. 5. The crankshaft 15 of the engine 10 and the input shaft 32 of the transmission 30 have their central axes positioned along an axial line normal to the sheet of FIG. 5, indicated at A. The transmission countershaft 33 has a central axis B positioned substantially vertically below the central axes A of the transmission input shaft 32. The transmission output shaft 34 has a central axis C positioned laterally of the countershaft 33 and displaced upwardly from the countershaft 33 by a distance d. The reverse idler gear has its central axis located at D.

With the shafts thus arranged, the transmission 30 is of a reduced height and made compact. Even when the transmission input shaft 32 is disposed coaxially with the crankshaft 15 and the position of the engine 10 with respect to the automobile body is lowered, since the output shaft 34 of the transmission 30 is displaced by the distance d upwardly from the transmission countershaft 33, the lower surface of the transmission 30 can lie flush with or be positioned upwardly of the lower surface of the engine 10. Therefore, a desired minimum height of the automobile from the ground can easily be achieved. Inasmuch as the transmission output shaft 34 is located alongside of the transmission countershaft 33 and the transmission input shaft 32, the final driver pinion shaft 61a of the final reduction gear unit 60 is disposed laterally of the engine 10 and coaxially with and coupled the transmission output shaft 34 without undue limitations.

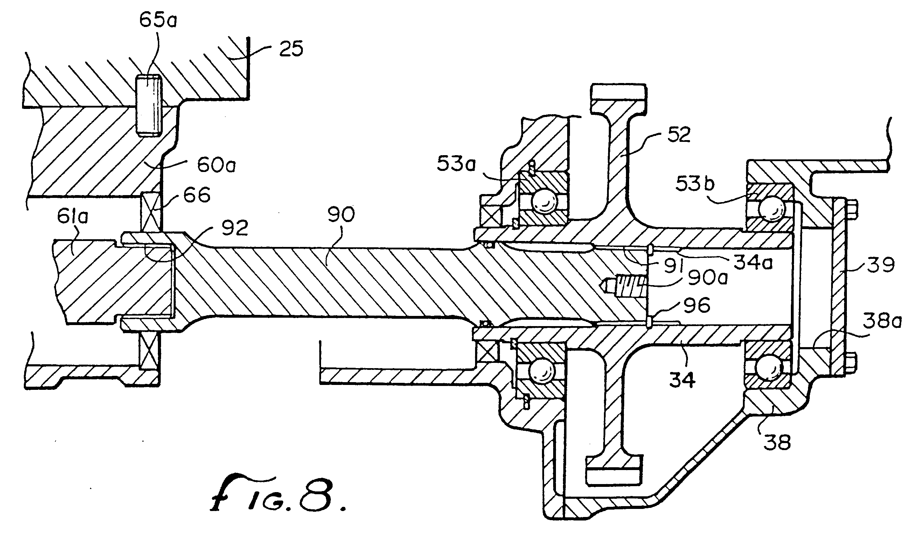

FIGS. 6 and 7 show in cross section a joint structure by which the output shaft 34 of the transmission 30 and the final driver pinion shaft 61a of the final reduction gear unit 60 are coupled to each other through the intermediate shaft 90 in the drive system of the above arrangement. The transmission output shaft 34 is integrally formed with the output gear 52 and rotatably supported by a pair of ball bearings 53a, 53b. The transmission output shaft 34 has internal splines 34a in its bore. The final driver pinion shaft 61a has external splines 61c (FIG. 7) on its end portion and a radial annular clip ring groove 61b defined near the end thereof. A clip ring 93 is disposed in the clip ring groove 61b, as shown in FIG. 7.

The intermediate shaft 90 has external splines 91 on its righthand end portion which are held in mesh with the internal splines 34a in the output shaft 34, and internal splines 92 in its lefthand end portion which are held in mesh with the external splines 61c of the final driver pinion shaft 61. As shown in FIG. 6, the intermediate shaft 90 axially interconnects the output shaft 34 and the final driver pinion shaft 61a through the splines 91, 92 meshing with the companion splines 34a, 61c, respectively.

If the shafts were interconnected by only the meshing engagement of these splines, the intermediate shaft 90 would be axially slidable freely and might move to the right until the splines 92 and the splines 61c would become disengaged and out of mesh with each other. To avoid this, as shown in FIG. 7, an annular groove 92a is defined at the inner ends of the internal splines 92 in the intermediate shaft 90. When the external splines 61c of the final driver pinion shaft 61a are moved into mesh with the internal splines 92, the clip ring 93 is fully compressed into the clip ring groove 61b by the radially inner surfaces of the internal splines 92 and when the splines 92, 61c are in complete mesh with each other, the clip ring 93 expands radially outwardly into the groove 92a. The intermediate shaft 90 is therefore locked in the position shown in FIG. 6. The clip ring 93 thus serves as a lock means.

The clip ring 93 expands radially under its own spring forces for locking the shafts 61a, 90 together. Thus, the intermediate shaft 90 can be unlocked or released from the final driver pinion shaft 61a by forcibly pushing the intermediate shaft 90 to the right. Since the positioning pins 65a, 65b are fitted across the joining surfaces of the engine 10 and the final reduction gear unit 60, it would be impossible to move the final reduction gear unit 60 in the axial direction of the intermediate shaft 90. Also, it would be impossible to move the final reduction gear unit 60 in a direction normal to the axis of the intermediate shaft 90 for disengaging the positioning pins 65a, 65b because the intermediate shaft 90 is in the way. Consequently, the final reduction gear unit 60 could not be detached. However, by forcibly pushing the intermediate shaft 90 to the right, the intermediate shaft 90 is unlocked from the clip ring 93. The intermediate shaft 90 is subsequently moved to the right until the splines 92, 61c are disengaged from each other. Thus, the intermediate shaft 90 is removed from the final reduction gear unit 60, which can thereafter be dismounted from the engine 10. The illustrated structure of the drive system thus permits the transmission 30 and the final reduction gear unit 60 to be independently attached to and detached from the engine 10.

FIG. 8 shows in cross section an alternate structure for locking the intermediate shaft 90 in position. The end portion of the final driver pinion 61a has external splines 61c but has no clip ring groove. A circlip ring or retainer ring 96 is disposed as a lock means on the internal splines 34a in the bore of the transmission output shaft 34 for limiting rightward movement of the intermediate shaft 90 and holding the intermediate shaft 90 in engagement with both the transmission output shaft 34 and the final driver pinion shaft (i.e., the input shaft of the final reduction gear unit) 61a to interconnect them.

The transmission case has an opening 38a defined in a portion 38 thereof which confronts the righthand end of the output shaft 34, and the opening 38a is covered with a cover 39. By detaching the cover 39 and removing the circlip ring 96 with a circlip tool or the like inserted through the opening 38a, the intermediate shaft 90 can be moved to the right. The intermediate shaft 90 can be axially pulled out of engagement with the final driver pinion 61a by a puller (not shown) having a distal end threaded to threadedly engage an internally threaded hole 90a defined in the righthand end of the intermediate shaft 90.

In the illustrated embodiments, the engine has its crankshaft oriented longitudinally with respect to the automobile. However, the present invention is also applicable to a drive system having an engine with its crankshaft oriented transversely with respect to the automobile. Also, the final speed reduction gear unit may be joined to the engine downwardly thereof without departing from this invention. While in the shown embodiments the intermediate shaft is moved to the right out of engagement with the final reduction gear unit, the drive system may be arranged such that the intermediate shaft can be disconnected from the final reduction gear unit or the transmission by being moved to the left.

With the present embodiment, as described above, the intermediate shaft for interconnecting the transmission output shaft and the input shaft of the final speed reduction gear unit can be locked by a lock member in a position to engage the output and input shafts and connect them to each other. By unlocking the intermediate shaft from the lock member, the intermediate shaft can be moved in an axial direction out of engagement with at least one of the output and input shafts. For dismounting the transmission and the final reduction gear unit from the engine, the intermediate shaft is unlocked from the lock member so as to be movable in the axial direction, and is moved in the axial direction out of engagement with the output shaft of the transmission or the input shaft of the final reduction gear unit. With the intermediate shaft released from the transmission or the final reduction gear unit, the transmission and the final reduction gear unit can independently be disassembled and assembled from the engine. The process of disassembling and assembling the transmission and the final reduction gear unit can be readily accomplished.

## Claims

1. A drive system for an automobile comprising an engine (10), a transmission (30) having an output shaft (34) and coupled to an output end of the engine (10), a final speed reduction gear unit (60) coupled to said engine (10) either laterally or downwardly thereof separately from said transmission (30) and having an input shaft (61a) positioned substantially coaxially with said output shaft (34) of the transmission, said input shaft (61a) and output shaft (34) being coupled to each other through an intermediate shaft (90), characterised in that said intermediate shaft (90) is a single substantially rigid member with axially extending spline means (91,92) on each end engageable with axially extending spline means (34a, 61c) on the input and output shafts, in that the intermediate shaft is selectively coaxially movable with respect to said output shaft (34) and said input shaft (61a), in that a locking member (93,96) is provided having a locked position for locking said intermediate shaft (90) in a position in which the spline means of the intermediate shaft (90) is engaged with the spline means of said output (34) and input (61a) shafts, and in that said intermediate shaft is releasable from said engaged position when said locking member is in the unlocked position and the intermediate shaft is then movable, only axially, with respect to said input and output shafts until spline means on one end of the intermediate shaft is disengaged from one of said output and input shafts and the spline means on the other end remains engaged with the other of said input and output shafts for mounting and/or dismounting of the final speed gear reduction unit and/or said transmission in a lateral direction.

2. A drive system as claimed in claim 1, wherein the lock member comprises a split ring (93,96), said intermediate shaft (90) and at least one of said output (34) and input (61a) shafts having means (61b) for mating engagement with said split ring (93,96) for causing said locking.

3. A drive system as claimed in claim 2, wherein said split ring (93,96) is resiliently collapsible for releasing said split ring from said mating engagement.

4. A drive system as claimed in claim 2 or 3, wherein said means for mating engagement include an annular groove (61b) in at least one of said output (34) and input (61a) shafts and in which said split ring (93) is positioned.

5. A drive system as claimed in claim 4, wherein said groove (61b) is provided near the end of the final speed reduction gear unit input shaft (61a), and the split ring (93) resiliently engages a second groove (92a) in the intermediate shaft (90).

6. A drive system as claimed in claim 5, wherein said annular groove (92a) in said input shaft is in a portion of said spline means.

7. A drive system as claimed in claim 4, wherein said annular groove is located in said transmission output shaft (34a) and said split ring (96) engages an end of the intermediate shaft (90).

8. A drive system as claimed in claim 7, wherein the transmission (30) is provided with a hole (38a) in alignment with said output shaft (34) for access to said split ring (96) for releasing same, and a removable cover (39) for said hole (38a).

9. A drive system as claimed in any preceding claim, wherein said transmission output shaft (34) is tubular with an internal spline (34a), said intermediate shaft (90) has an external spline (91) on one end for meshing engagement with the output shaft spline (34a), and said intermediate shaft (90) being axially slidable within said tubular output shaft (34) for disengagement from said input shaft (61a).

## Patentansprüche

1. Antriebssystem für ein Kraftfahrzeug, umfassend: einen Motor (10), ein Getriebe (30), das eine Ausgangswelle (34) aufweist und an ein Ausgangsende des Motors (10) angeschlossen ist, eine Enddrehzahl-Reduziergetriebeeinheit (60), die an dem Motor (10) entweder seitlich oder unterhalb davon getrennt von dem Getriebe (30) angeschlossen ist und eine Eingangswelle (61a) aufweist, die im wesentlichen koaxial zu der Ausgangswelle (34) des Getriebes angeordnet ist, wobei die Eingangswelle (61a) und die Ausgangswelle (34) durch eine Zwischenwelle (90) miteinander verbunden sind,
**dadurch gekennzeichnet**,
daß die Zwischenwelle (90) ein einzelnes, im wesentlichen festes Teil mit axial verlaufenden Längsverzahnungsmitteln (91, 92) an jedem Ende ist, die mit axial verlaufenden Längsverzahnungsmitteln (34a, 61c) an den Eingangs- und Ausgangswellen in Eingriff bringbar sind, daß die Zwischenwelle relativ zu der Ausgangswelle (34) und der Eingangswelle (61a) selektiv koaxial beweglich ist, daß ein Riegelteil (93, 96) vorgesehen ist, das eine Riegelstellung zum Verriegeln der Zwischenwelle (90) in einer Stellung aufweist, in der die Längsverzahnungsmittel der Zwischenwelle (90) mit dem Längsverzahnungsmittel der Ausgangs (34)- und Eingangs (61)-wellen in Eingriff stehen, und daß die Zwischenwelle von der Eingriffsstellung lösbar ist, wenn sich das Riegelteil in der entriegelten Stellung befindet, und dann die Zwischenwelle bezüglich der Eingangs- und Ausgangswellen nur axial beweglich ist, bis das Längsverzahnungsmittel an einem Ende der Zwischenwelle von einer der Ausgangs- und Eingangswellen außer Eingriff ist und das Längsverzahnungsmittel an dem anderen Ende mit der anderen der Eingangs- und Ausgangswellen in Eingriff bleibt, um die Enddrehzahl-Reduziergetriebeeinheit und/oder das Getriebe in einer Querrichtung zu montieren und/oder zu demontieren.

2. Antriebssystem nach Anspruch 1, in dem das Riegelteil einen Schlitzring (93, 96) umfaßt, wobei die Zwischenwelle (90) und wenigstens eine der Ausgangs (34)- und Eingangs (61a)-wellen Mittel (61b) zum komplementären Eingriff mit dem Schlitzring (93, 96) aufweisen, um das Verriegeln zu bewirken.

3. Antriebssystem nach Anspruch 2, in dem der Schlitzring (93, 96) zum Lösen des Schlitzrings aus dem komplementären Eingriff federnd zusammendrückbar ist.

4. Antriebssystem nach Anspruch 2 oder 3, in dem die Mittel zum komplementären Eingriff eine Ringnut (61b) in wenigstens einer der Ausgangs (34)- und Eingangs (61a)-wellen umfassen, in der der Schlitzring (93) angeordnet ist.

5. Antriebssystem nach Anspruch 4, in dem die Nut (61b) nahe dem Ende der Eingangswelle (61a) der Enddrehzahlreduziergetriebeeinheit angeordnet ist und der Schlitzring (93) federnd in eine zweite Nut (92a) in der Zwischenwelle (90) eingreift.

6. Antriebssystem nach Anspruch 5, in dem die Ringnut (92a) in der Eingangswelle ein Teil des Längsverzahnungsmittels ist.

7. Antriebssystem nach Anspruch 4, in dem die Ringnut in der Getriebeausgangswelle (34a) angeordnet ist und der Schlitzring (96) in ein Ende der Zwischenwelle (90) eingreift.

8. Antriebssystem nach Anspruch 7, in dem für Zugang zu dem Schlitzring (96) zu dessen Entfernung das Getriebe (30) mit einem mit der Ausgangswelle (34) fluchtenden Loch (38a) und einem entfernbaren Deckel (39) für das Loch (38a) versehen ist.

9. Antriebssystem nach einem der vorhergehenden Ansprüche, in dem die Getriebeausgangswelle (34) rohrförmig mit einer Innenlängsverzahnung (34a) ist, wobei die Zwischenwelle (90) an einem Ende eine Außenlängsverzahnung (91) zum Kammeingriff mit der Ausgangswellenlängsverzahnung (34a) aufweist, und wobei die Zwischenwelle (90) in der rohrförmigen Ausgangswelle (34) zur Trennung von der Eingangswelle (61a) axial verschiebbar ist.

## Revendications

1. Système de transmission pour une automobile, comprenant un moteur (10), une transmission (30) qui possède un arbre de sortie (34) et est accouplée à une extrémité de sortie du moteur (10), une unité finale de réduction de vitesse à engrenages (60), accouplée audit moteur (10), soit latéralement à celui-ci, soit au-dessous de celui-ci, séparément de ladite transmission (30), et ayant un arbre d'entrée (61a) positionné sensiblement coaxialement audit arbre de sortie (34) de la transmission, ledit arbre d'entrée (61a) et ledit arbre de sortie (34) étant accouplés l'un à l'autre par un arbre intermédiaire (90), caractérisé en ce que ledit arbre intermédiaire (90) est un organe unique, sensiblement rigide, portant, sur chaque extrémité, des moyens formant cannelure (91, 92) qui peuvent être mis en prise avec des moyens formant cannelure (34a, 61c) s'étendant axialement, prévus sur les arbres d'entrée et de sortie, en ce que l'arbre intermédiaire peut être déplacé sélectivement coaxialement par rapport audit arbre de sortie (34) et audit arbre d'entrée (61a), en ce qu'il est prévu un organe de verrouillage (93, 96) ayant une position verrouillée pour verrouiller ledit arbre intermédiaire (90) dans une position dans laquelle les moyens formant cannelure de l'arbre intermédiaire (90) sont en prise avec les moyens formant cannelure desdits arbres de sortie (34) et d'entrée (61a) et en ce que ledit arbre intermédiaire peut être libéré de ladite position de prise lorsque ledit élément de verrouillage est dans la position déverrouillée et que l'arbre intermédiaire peut donc être déplacé uniquement axialement par rapport auxdits arbres d'entrée et de sortie jusqu'à ce que les moyens formant cannelure prévus sur une extrémité de l'arbre intermédiaire soient dégagés de l'un desdits arbres de sortie et d'entrée et que les moyens formant cannelure situés sur l'autre extrémité restent en prise avec l'autre desdits arbres d'entrée et de sortie, pour le montage et/ou le démontage de l'unité finale de réduction de vitesse à engrenages et/ou de ladite transmission dans une direction latérale.

2. Système d'entraînement selon la revendication 1, dans lequel l'organe de verrouillage comprend une bague fendue (93, 96), ledit arbre intermédiaire (90) et au moins l'un des arbres de sortie (34) et d'entrée (61a) ayant des moyens (61b) destinés à entrer en prise d'accouplement avec ladite bague fendue (93, 96) pour établir ledit verrouillage.

3. Système d'entraînement selon la revendication 2, dans lequel ladite bague fendue (93, 96) peut se resserrer élastiquement pour libérer ladite bague fendue de ladite prise d'accouplement.

4. Système d'entraînement selon la revendication 2 ou 3, dans lequel lesdits moyens servant pour la prise d'accouplement comprennent une gorge annulaire (61b) pratiquée dans au moins l'un des arbres de sortie (34) et d'entrée (61a) et dans laquelle ladite bague fendue (93) est positionnée.

5. Système d'entraînement selon la revendication 4, dans lequel ladite gorge (61b) est prévue à proximité de l'extrémité de l'arbre d'entrée (61a) de l'unité finale de réduction de vitesse à engrenages, et la bague fendue (93) est engagée élastiquement dans une deuxième gorge (92a) de l'arbre intermédiaire (90).

6. Système d'entraînement selon la revendication 5, dans lequel ladite gorge annulaire (92a) dudit arbre d'entrée est formée dans une partie desdits moyens formant cannelure.

7. Système d'entraînement selon la revendication 4, dans lequel ladite gorge annulaire est prévue dans ledit arbre de sortie (34a) de la transmission et ladite bague fendue (96) est en prise avec une extrémité dudit arbre intermédiaire (90).

8. Système d'entraînement selon la revendication 7, dans lequel la transmission (30) est munie d'un trou (38a) placé dans l'alignement dudit arbre de sortie (34) pour permettre d'accéder à ladite bague fendue (96) pour la libérer, et un couvercle amovible (39) pour ledit trou (38a).

9. Système d'entraînement selon une quelconque des revendications précédentes, dans lequel ledit arbre de sortie (34) de la transmission est tubulaire, avec une cannelure intérieure (34a), ledit arbre intermédiaire (90) possède une cannelure extérieure (91) sur une extrémité, pour entrer en prise avec la cannelure (34a) de l'arbre de sortie, et ledit arbre intermédiaire (90) pouvant coulisser axialement dans ledit arbre de sortie tubulaire (34) pour se dégager dudit arbre d'entrée (61a).
